# EUROPÄISCHE PATENTSCHRIFT

(11) **EP 1 776 808 B1**
(45) Veröffentlichungstag und Bekanntmachung des Hinweises auf die Patenterteilung: **26.03.2008**
(21) Anmeldenummer: 05760988.5
(22) Anmeldetag: 29.06.2005
(51) Int. Cl.: H04L 12/56

(54) **VERFAHREN ZUR SPEICHERUNG VON BOTSCHAFTEN IN EINEM BOTSCHAFTSSPEICHER UND BOTSCHAFTSSPEICHER**
METHOD FOR STORING MESSAGES IN A MESSAGE MEMORY AND CORRESPONDING MESSAGE MEMORY
PROCEDE DE MISE EN MEMOIRE DE MESSAGES DANS UNE MEMOIRE DE MESSAGES ET MEMOIRE DE MESSAGES ASSOCIEE

(30) Priorität: 05.08.2004 DE 102004038210
(43) Veröffentlichungstag der Anmeldung: 25.04.2007
(73) Patentinhaber: ROBERT BOSCH GMBH, 70442 Stuttgart (DE)
(72) Erfinder: HARTWICH, Florian, 72762 Reutlingen (DE); HORST, Christian, 72144 Dusslingen (DE); BAILER, Franz, 72770 Reutlingen (DE)
(86) Internationale Anmeldenummer: PCT/EP2005/053057
(87) Internationale Veröffentlichungsnummer: WO 2006/015908

(56) Entgegenhaltungen:
- WO-A-01/86869
- US-A1- 2002 004 381
- US-A1- 2003 210 684
- PATENT ABSTRACTS OF JAPAN Bd. 011, Nr. 113 (E-497), 9. April 1987 (1987-04-09) & JP 61 262339 A (FUJITSU LTD), 20. November 1986 (1986-11-20)

## Beschreibung

### Stand der Technik

Die Erfindung betrifft ein Verfahren zur Speicherung einer Anzahl von Botschaften in einem Botschaftsspeicher in einem Kommunikationsbausstein sowie einen Kommunikationsbaustein gemäß den aus dem Stand der Technik bekannten Merkmalen der unabhängigen Ansprüche.

Die Vernetzung von Steuergeräten, Sensorik und Aktuatorik mit Hilfe eines Kommunikationssystems und eines Bussystems, also einer Kommunikationsverbindung hat in den letzten Jahren beim Bau von modernen Kraftfahrzeugen oder auch im Maschinenbau, insbesondere im Werkzeugmaschinenbereich also auch in der Automatisierung, drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über ein Bussystem, also ein Kommunikationssystem statt. Der Kommunikationsverkehr auf dem Bussystem, Zugriffs- und Empfangsmechanismen sowie Fehlerbehandlung werden über ein Protokoll geregelt. Ein bekanntes Protokoll hierzu ist das CAN-Protokoll oder auch das TTCAN-Protokoll sowie das FlexRay-Protokoll, wobei im Augenblick die FlexRay-Protokollspezifiktaion V2.0 zugrunde liegt. Der FlexRay ist dabei ein schnelles, deterministisches und fehlertolerantes Bussystem, insbesondere für den Einsatz in einem Kraftfahrzeug. Das FlexRay-Protokoll arbeitet nach dem Verfahren des Time-Division-Multiple-Access (TDMA), wobei den Komponenten, also Teilnehmern bzw. den zu übertragenden Botschaften feste Zeitschlitze zugewiesen werden, in denen sie ein exklusiven Zugriff auf die Kommunikationsverbindung haben. Vergleichbar wird dies auch beim TTCAN umgesetzt. Die Zeitschlitze wiederholen sich dabei in einem festgelegten Zyklus, sodass der Zeitpunkt, zu dem eine Botschaft über den Bus übertragen wird, exakt vorausgesagt werden kann und der Buszugriff deterministisch erfolgt. Um die Bandbreite für die Botschaftsübertragung auf dem Bussystem optimal zu nutzen unterteilt der FlexRay den Zyklus in einen statischen und einen dynamischen Teil. Die festen Zeitschlitze befinden sich dabei im statischen Teil am Anfang eines Buszyklussees. Im dynamischen Teil werden die Zeitschlitze dynamisch vergeben. Darin wird nun der exklusive Buszugriff jeweils nur für eine kurze Zeit, sogenannte Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie auch tatsächlich benötigt wird. Dabei kommuniziert FlexRay über zwei physikalisch getrennte Leitungen mit einer Datenrate von je maximal 10MB pro Sekunde. Die beiden Kanäle entsprechen dabei der physikalischen Schicht, insbesondere des OSI (Open System Architecture) Schichtenmodells. Diese dienen nun hauptsächlich der redundanten und damit fehlertoleranten Übertragung von Botschaften, können jedoch auch unterschiedliche Botschaften übertragen, wodurch sich dann die Datenrate verdoppeln würde. FlexRay kann aber auch mit niedrigeren Datenraten betrieben werden.

Um synchrone Funktionen zu realisieren und die Bandbreite durch kleine Abstände zwischen zwei Botschaften zu optimieren, benötigen die verteilten Komponenten im Kommunikationsnetzwerk, also die Teilnehmer, eine gemeinsame Zeitbasis, die sogenannte globale Zeit. Für die Uhrensynchronisation werden Synchronisationsnachrichten im statischen Teil des Zyklus übertragen, wobei mit Hilfe eines speziellen Algorhytmus entsprechend der FlexRaySpezifikation die lokale Uhrzeit einer Komponente so korrigiert wird, dass alle lokalen Uhren zu einer globalen Uhr synchron laufen. Diese Synchronisation erfolgt vergleichbar auch in einem TTCAN-Netzwerk.

Ein FlexRay-Netzknoten oder FlexRay-Teilnehmer oder Host enthält einen Teilnehmerprozessor, also den Hostprozessor, einen FlexRay-Controller oder Kommunikationscontroller sowie bei einer Busüberwachung einen Busguardian. Dabei liefert und verarbeitet der Host-Prozessor, also der Teilnehmerprozessor die Daten, die über den FlexRay-Kommunikationscontroller übertragen werden. Für die Kommunikation in einem FlexRay-Netzwerk können Botschaften bzw. Botschaftsobjekte mit z. B. bis zu 254 Datenbytes konfiguriert werden. Um nun diese Botschaften bzw. Botschaftsobjekte zwischen physikalischer Schicht also der Kommunikationsverbindung und dem Host-Prozessor zu übertragen, wird ein Kommunikationsbaustein, insbesondere ein Kommunikationscontroller, eingesetzt. Aus den Stand der Technik, wie beispielsweise WO-A2-01/86869 sind Botschaftsspeicher in Kommunikationbausteinen bekannt, wobei Daten aus dem Kopfsegment gesondert von den Daten aus dem Datensegment gespeichert werden.

Aufgabe ist es nun, einen Botschaftsspeicher für einen Kommunikationsbaustein eines Bussystems zur Verfügung zu stellen, der die Übertragung von Botschaften in optimaler Weise unterstützt.

### Vorteile der Erfindung

Dazu wird ein Verfahren zur Speicherung von Botschaften in einem solchen Botschaftsspeicher sowie ein entsprechender Botschaftsspeicher zur Speicherung von Sende- und Empfangsbotschaften unter Verwendung insbesondere eines RAM (Random Access Memory) erfindungsgemäß dargestellt. Dabei ist die Anzahl der speicherbaren Botschaften abhängig von der Größe der Datenbereiche der Botschaften. Die Erfindung erlaubt es nun, in einem Speicher insbesondere einem RAM vorgegebener Größe eine variable Anzahl von Botschaften zu speichern, gleichzeitig die Größe des benötigten RAM-Speichers zu minimieren und optimal auszunutzen ohne die Größe der Datenbereiche der Botschaften einzuschränken.

Dazu ist ein Verfahren zur Speicherung von Botschaften und ein Botschaftsspeicher in einem Kommunikationsbaustein zur Speicherung einer Anzahl von Botschaften offenbart, wobei in den zu speichernden Botschaften erste Daten mit einem ersten Datenumfang sogenannte Header-Daten (also Status- und Konfigurationsdaten) und zweite Daten mit einem zweiten Datenumfang (die eigentlich zu sendenden Daten) enthalten sind. Dabei kann der zweite Datenumfang pro Botschaft wie erwähnt unterschiedlich sein wobei der Botschaftsspeicher vorteilhafterweise ein Kopfsegment oder Headersegment enthält, in dem die ersten Daten der Botschaft in je einem Kopfbereich oder Headerbereich pro Botschaft gespeichert werden und der Botschaftsspeicher weiterhin ein Datensegment enthält, in dem die zweiten Daten der Botschaft in je einem Datenbereich pro Botschaft gespeichert werden und der Botschaftsweicher derart ausgestaltet ist, dass eine variable Aufteilung zwischen dem Kopfsegment und dem Datensegment abhängig von der Anzahl der Botschaften und dem zweiten Datenumfang erzeugt wird. Damit ist die Aufteilung insbesondere des RAM-Speichers, also des Botschaftsspeichers zwischen Headersection oder Headersegment und Datensection, also Datensegment, variabel, sodass wenn weniger Botschaften konfiguriert werden die Headersection kleiner ist und dafür der freiwerdende Bereich im Botschaftsspeicher für die Speicherung der eigentlich zu übertragenden Daten verwendet werden kann.

In einer vorteilhaften Ausgestaltung wird dazu im Kopfsegment in jedem Kopfbereich ein Zeigerelement pro Botschaft vorgesehen, ein sogenannter Datapointer, durch welches ein Datenbereich im Datensegment bestimmt wird, indem der Datapointer insbesondere auf die Anfangsadresse des jeweiligen Datenbereichs zeigt

In einer weiteren Ausführungsform werden zweckmäßigerweise die ersten und zweiten Daten der Botschaften in einer vorgebbaren Reihenfolge im Botschaftsspeicher gespeichert, sodass die Reihenfolge der Kopfbereiche im Kopfsegment und die Reihenfolge der Datenbereiche im Datensegment jeweils identisch ist und sich somit aus der Position des jeweiligen Kopfbereichs einer Botschaft im Kopfsegment der zugehörige Datenbereich im Datensegment ergibt. Dabei ist der Botschaftsspeicher vorteilhafter Weise als FIFO ausgebildet um die Botschaft in der Reihenfolge des Eintreffens weiter zu übertragen.

Um den Speicherplatz im Botschaftsspeicher optimal zu nutzen werden die ersten Daten der Botschaft in je einem Kopfbereich pro Botschaft und mit einer für jeden Kopfbereich festgelegten und identisch vorgegebenen ersten Anzahl von Speicherworten gespeichert, insbesondere in genau einem Speicherwort. Dabei kann auch der entsprechende Zeiger oder Datapointer in einer fest vorgegebenen Anzahl von Speicherworten mit abgespeichert werden, sodass sich insgesamt für jeden Kopfbereich des Kopfsegments die gleiche Anzahl an Speicherworten ergibt und damit allein durch die Anzahl der gespeicherten oder zu speichernden Botschaften die Größe des Kopfsegmentes durch die Verwendung einer konstanten Anzahl von Speicherworten insgesamt ergibt.

Zweckmäßiger Weise ist dazu der Botschaftsspeicher mit einer vorgegebenen festen Speicherwortbreite ausgebildet. Insbesondere ist es von Vorteil, wenn Kopfbereich und Datenbereich unmittelbar aufeinander folgen und sich die variable Aufteilung durch Verschiebung dieser Bereichsgrenze ergibt

Zur Fehlererkennung kann vorteilhafter Weise vorgesehen sein, dass jeder Datenbereich wenigstens eine vorgegebene Speicherwortbreite umfasst und pro Speicherwortbreite eine Kontrollkennung im Datenbereich insbesondere ein Parity-Bit vorgesehen ist und dass dem Botschaftsspeicher ein Parity-Bit-Generatorelement und ein Parity-Bit-Prüfelement zugeordnet ist um die Kontrollkennung insbesondere das Parity-Bit zu erzeugen und damit die Korrektheit der abgespeicherten Daten zu prüfen.

In einer bevorzugten Ausführungsform wird ein erfindungsgemäßer Botschaftsspeicher in einem FlexRay-Kommunikationsbaustein eingesetzt welcher sich wiederum in einem Teilnehmer eines FlexRay-Netzwerks, also einem Steuergerät befindet oder diesem direkt zugeordnet ist.

Damit ergeben sich erfindungsgemäß durch die variable Aufteilung des Botschaftsspeichers diverse Vorteile: So kann der Anwender bei der Programmierung entscheiden ob er eine größere Anzahl von Botschaften mit kleinem Datenfeld oder ob er eine kleinere Anzahl von Botschaften mit großem Datenfeld verwenden möchte. Bei der Konfiguration von Botschaften mit unterschiedlich großem Datenbereich wird der vorhandene Speicher optimal ausgenutzt. Der Anwender hat die Möglichkeit einen Datenbereich gemeinsam für unterschiedliche Botschaften zu benutzen. Bei der Implementierung des Kommunikationscontrollers also des Kommunikationsbausteins auf einer integrierten Schaltung kann die Größe des Botschaftsspeichers durch Anpassung der Speichertiefe des verwendeten Speichers, insbesondere RAM-Speichers an die BedürFnisse der Applikation exakt angepasst werden, ohne die sonstigen Funktionen des Kommunikationscontrollers oder Kommunikationsbausteins zu ändern..

Weitere Vorteile und vorteilhafte Ausgestaltungen ergeben sich aus den Merkmalen der Ansprüche sowie aus der Beschreibung.

### Zeichnung

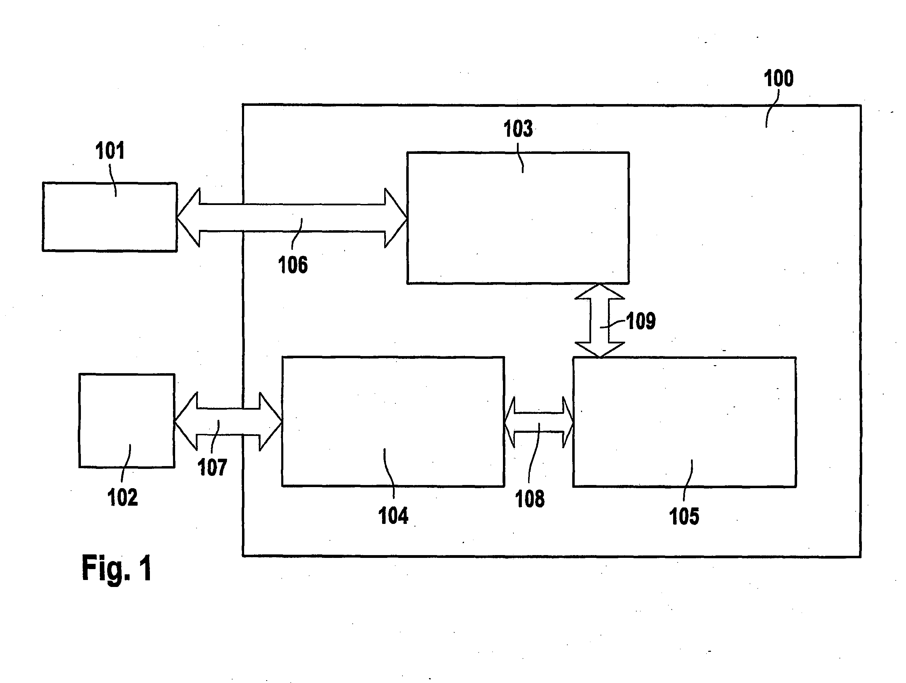

Die Erfindung wird anhand der nachfolgenden Figuren der Zeichnung näher erläutert Dabei zeigt Figur 1 in schematischer Darstellung den Kommunikationsbaustein und dessen Anbindung an die physikalische Schicht, also die Kommunikationsverbindung und den Kommunikations- oder Host-Teilnehmer.

Figur 2 stellt in einer speziellen Ausführungsform den Kommunikationsbaustein aus ' Figur 1 sowie dessen Anbindung detaillierter dar.

In Figur 3 ist die Struktur des Botschaftsspeichers dargestellt.

Figur 4 bis 6 beschreibt schematisch die Architektur und den Prozess des Datenzugriffs in Richtung vom Teilnehmer zum Botschaftsspeicher.

Figur 7 bis 9 beschreibt schematisch Architektur und Prozess des Datenzugriffs in Richtung vom Botschaftsspeicher zum Teilnehmer.

In Figur 10 ist der Botschaftsverwalter und die darin enthaltenen Finit-State-Maschinen schematisch dargestellt.

Figur 11 zeigt noch einmal schematisch die Bauteile des Kommunikationsbausteins sowie den Teilnehmer und die entsprechenden, durch den Botschaftsverwalter gesteuerten Datenpfade.

Figur 12 beschreibt die Zugriffsverteilung bezogen auf die Datenpfade in Figur 11.

Die Erfindung wird nachfolgend anhand der Ausführungsbeispiele näher erläutert.

### Ausführungsbeispiele

Figur 1 zeigt schematisch einen FlexRay-Kommunikationsbaustein 100 zur Anbindung eines Teilnehmers oder Hosts 102 an eine FlexRay-Kommunikationsverbindung 101, also die physikalische Schicht des FlexRay. Dazu ist der FlexRay-Kommunikationsbaustein 100 über eine Verbindung 107 mit dem Teilnehmer bzw. Teilnehmerprozessor 102 und über eine Verbindung 106 mit der Kommunikationsverbindung 101 verbunden. Zur problemlosen Anbindung zum einen bezogen auf Übertragungszeiten und zum anderen bezogen auf die Datenintegrität sind schematisch im Wesentlichen drei Anordnungen im FlexRay-Kommunikationsbaustein unterschieden. Dabei dient eine erste Anordnung 105 zur Speicherung, insbesondere Zwischenablage, wenigstens eines Teils der zu übertragenden Botschaften. Zwischen dem Teilnehmer 102 und dieser ersten Anordnung 105 ist über die Verbindungen 107 und 108 eine zweite Anordnung 104 geschaltet. Ebenso ist zwischen Teilnehmer 101 und die erste Anordnung 105 eine dritte Anordnung 103 über die Verbindungen 106 und 109 geschaltet, wodurch ein sehr flexibles Eingeben und Ausgeben von Daten als Teil von Botschaften, insbesondere FlexRay Botschaften in bzw. aus der ersten Anordnung 105 mit Gewährleistung der Datenintegrität bei optimaler Geschwindigkeit erzielbar ist.

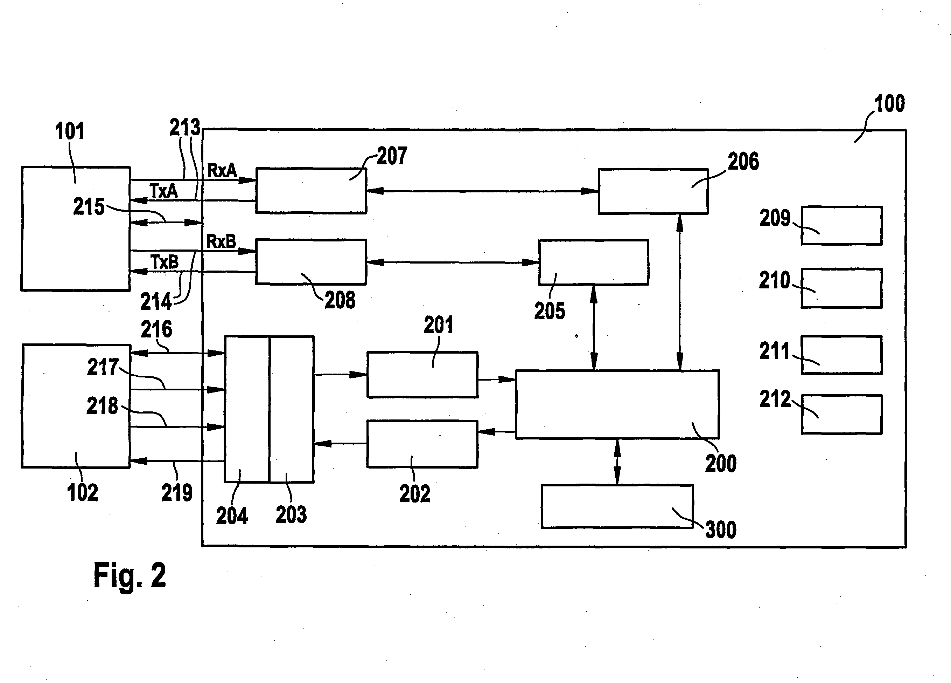

In Figur 2 ist dieser Kommunikationsbaustein 100 in einer bevorzugten Ausführungsform noch einmal detaillierter dargestellt. Ebenso detaillierter dargestellt sind die jeweiligen Verbindungen 106 bis 109. Die zweite Anordnung 104 enthält dabei einen Eingangspufferspeicher oder Eingabepufferspeicher 201 (Input Buffer IBF), einen Ausgangspufferspeicher oder Ausgabepufferspeicher 202 ( Output Buffer OBF) sowie einen Schnittstellenbaustein bestehend aus zwei Teilen 203 und 204, wobei der eine Teilbaustein 203 teilnehmerunabhängig und der zweite Teilbaustein 204 teilnehmerspezifisch ist. Der teilnehmerspezifische Teilbaustein 204 (Customer CPU Interface CIF) verbindet eine teilnehmerspezifische Host-CPU 102, also einen kundenspezifischen Teilnehmer mit dem FlexRay-Kommunikationsbaustein. Dazu ist eine bidirektionale Datenleitung 216, eine Adressleitung 217 sowie ein Steuereingang 218 vorgesehen. Ebenso vorgesehen ist mit 219 ein Interrupt- oder Unterbrechungs-Ausgang. Der teilnehmerspezifische Teilbaustein 204 steht in Verbindung mit einem teilnehmerunabhängigen Teilbaustein 203 (Generic CPU Interface, GIF), d. h. der FlexRay-Kommunikationsbaustein oder das FlexRay-IP-Modul verfügt über ein generisches, also allgemeines, CPU-Interface, an das sich über entsprechende teilnehmerspezifische Teilbausteine, also Customer CPU Interfaces CIF eine große Anzahl von unterschiedlichen kundenspezifischen Host CPU's anschließen lassen. Dadurch muss abhängig vom Teilnehmer nur der Teilbaustein 204 variiert werden, was einen deutlich geringeren Aufwand bedeutet.

Der Eingabepufferspeicher oder Eingangspufferspeicher 201 und der Ausgangspufferspeicher oder Ausgabepufferspeicher 202 können in einem Speicherbaustein oder aber in getrennten Speicherbausteinen ausgebildet sein. Dabei dient der Eingabepufferspeicher 201 für die Zwischenspeicherung von Botschaften für die Übertragung zum Botschaffisspeicher 200. Dabei ist der Eingabepufferbaustein vorzugsweise so ausgebildet, dass er zwei vollständige Botschaften bestehend aus jeweils einem Kopfsegment oder Headersegment, insbesondere mit Konfigurationsdaten und ein Datensegment oder Payload Segment speichern kann. Dabei ist der Eingabepufferspeicher zweiteilig (Teilpufferspeicher und Schattenspeicher) ausgebildet, wodurch sich durch wechselweises Schreiben der beiden Teile des Eingabepufferspeichers bzw. durch Zugriffswechsel die Übertragung zwischen Teilnehmer-CPU 102 und Botschaftsspeicher 200 beschleunigen lässt. Ebenso dient der Ausgabepufferspeicher oder Ausgangspufferspeicher (Output-Buffer OBF) für die Zwischenspeicherung von Botschaften für die Übertragung vom Botschaftsspeicher 200 zur Teilnehmer-CPU 102. Dabei ist auch der Ausgabepuffer 202 so gestaltet, dass zwei komplette Botschaften bestehend aus Kopfsegment, insbesondere mit Konfigurationsdaten und Datensegment, also Payload Segment, gespeichert werden können. Auch hier ist der Ausgabepufferspeicher 202 in zwei Teile, einen Teilpufferspeicher und einen Schattenspeicher aufgeteilt, wodurch sich auch hier durch wechselweises Lesen der beiden Teile die Übertragung bzw. durch Zugriffswechsel die Übertragung zwischen Teilnehmer- bzw. Host-CPU 102 und Botschaftsspeicher 200 beschleunigen lässt. Diese zweite Anordnung 104 bestehend aus den Blöcken 201 bis 204 ist mit der ersten Anordnung 105 wie dargestellt verbunden.

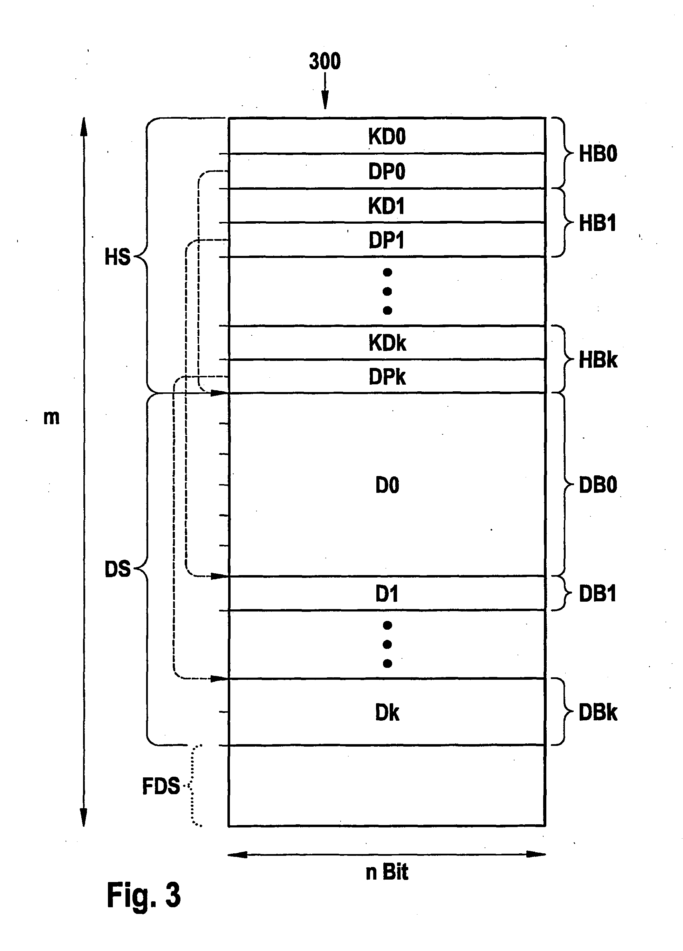

Die Anordnung 105 besteht aus einem Botschaftsverwälter 200 (Message Handler MHD) und einem Botschaftsspeicher 300 (Message RAM). Der Botschaftsverwalter kontrolliert bzw. steuert den Datentransfer zwischen dem Eingabepufferspeicher 201 sowie Ausgabepufferspeicher 202 und dem Botschaftsspeicher 300. Gleichermaßen kontrolliert bzw. steuert er die Datenübertragung in der anderen Richtung über die dritte Anordnung 103. Der Botschaftsspeicher ist vorzugsweise als single-ported RAM ausgeführt. Dieser RAM-Speicher speichert die Botschaften bzw. Botschaftsobjekte, also die eigentlichen Daten, zusammen mit Konfigurations- und Statusdaten. Die genaue Struktur des Botschaftsspeichers 300 ist in Figur 3 näher dargestellt.

Die dritte Anordnung 103 besteht aus den Blöcken 205 bis 208. Entsprechend den beiden Kanälen des FlexRay Physical Layer ist diese Anordnung 103 in zwei Datenpfade mit je zwei Datenrichtungen aufgeteilt. Dies wird durch die Verbindungen 213 und 214 deutlich, worin die beiden Datenrichtungen für den Kanal A, RxA und TxA für Empfangen (RxA) und Senden (TxA) sowie für Kanal B, RxB und TxB dargestellt sind.

Mit Verbindung 215 ist ein optionaler bidirektionaler Steuereingang bezeichnet Die Anbindung der dritten Anordnung 103 erfolgt über einen ersten Pufferspeicher 205 für Kanal B und einen zweiten Pufferspeicher 206 für Kanal A. Diese beiden Pufferspeicher (Transient Buffer RAM's: RAM A und RAM B) dienen als Zwischenspeicher für die Datenübertragung von bzw. zu der ersten Anordnung 105. Entsprechend der beiden Kanäle sind diese beiden Pufferspeicher 205 und 206 mit jeweils einem Schnittstellenbaustein 207 und 208 verbunden, die die FlexRay-Protokoll-Controller oder Busprotokoll-Controller bestehend aus einem Sende-/Empfangs-Schieberegister und der FlexRay Protokoll Finite State Maschine, enthalten. Die beiden Pufferspeicher 205 und 206 dienen somit als Zwischenspeicher für die Datenübertragung zwischen den Schieberegistern der Schnittstellenbausteine oder FlexRay Protokoll Controller 207 und 208 und dem Botschaftsspeicher 300. Auch hier werden vorteilhafter Weise durch jeden Pufferspeicher 205 oder 206 die Datenfelder, also das Payload Segment oder Datensegment zweier FlexRay-Botschaften gespeichert.

Weiterhin dargestellt im Kommunikationsbaustein 100 ist mit 209 die globale Zeiteinheit (Global Time Unit GTU), welche für die Darstellung der globalen Zeitraster im FlexRay, also den Mikrotick µT und den Makrotick MT zuständig ist. Ebenso wird über die globale Zeiteinheit 209 die fehlertolerante Uhrensynchronisation der Zykluszähler (Cycle Counter) und die Kontrolle der zeitlichen Abläufe im statischen und dynamischen Segment des FlexRay geregelt.

Mit Block 210 ist die allgemeine Systemsteuerung (System Universal Control SUC) dargestellt, durch welche die Operationsmodi des FlexRay-Kommunikationscontrollers kontrolliert und gesteuert werden. Dazu gehören der Wakeup, der Startup, die Reintegration bzw. Integration, Normaloperation (normal operation) und passive Operation (passive operation).

Block 211 zeigt das Netzwerk und Fehlennanagement (Network- und Error Management NEM), wie in der FlexRay-Protokollspezifikation v2.0 beschrieben. Block 212 schließlich zeigt die Unterbrechungssteuerung (Interrupt Control INT), welche die Status-und Fehlerunterbrechungsflaggen (status and error interrupt flags) verwaltet und die Unterbrechungsausgänge 219 zur Teilnehmer-CPU 102 kontrolliert bzw. steuert. Der Block 212 enthält außerdem einen absoluten und einen relativen Timer bzw. Zeitgeber zur Erzeugung der Zeitunterbrechungen oder Timerinterrupts.

Für die Kommunikation in einem FlexRay-Netzwerk können Botschaftsobjekte bzw. Botschaften (Message Buffer) mit bis zu 254 Datenbytes konfiguriert werden. Der Botschaftsspeicher 300 ist insbesondere ein Botschafts-RAM-Speicher (Message RAM), welcher z.B. bis zu maximal 64 Botschaftsobjekten speichern kann. Alle Funktionen, die die Behandlung bzw. Verwaltung der Botschaften selbst betreffen, sind dem Botschaftsverwalter oder Message Handler 200 implementiert. Dies sind z.B. die Akzeptanzfilterung, Transfer der Botschaften zwischen den beiden FlexRay-Protokoll-Controller-Blöcken 207 und 208 und dem Botschaftsspeicher 300, also dem Message RAM sowie die Kontrolle der Sendereihenfolge und das Bereitstellen von Konfigurationsdaten bzw. Statusdaten.

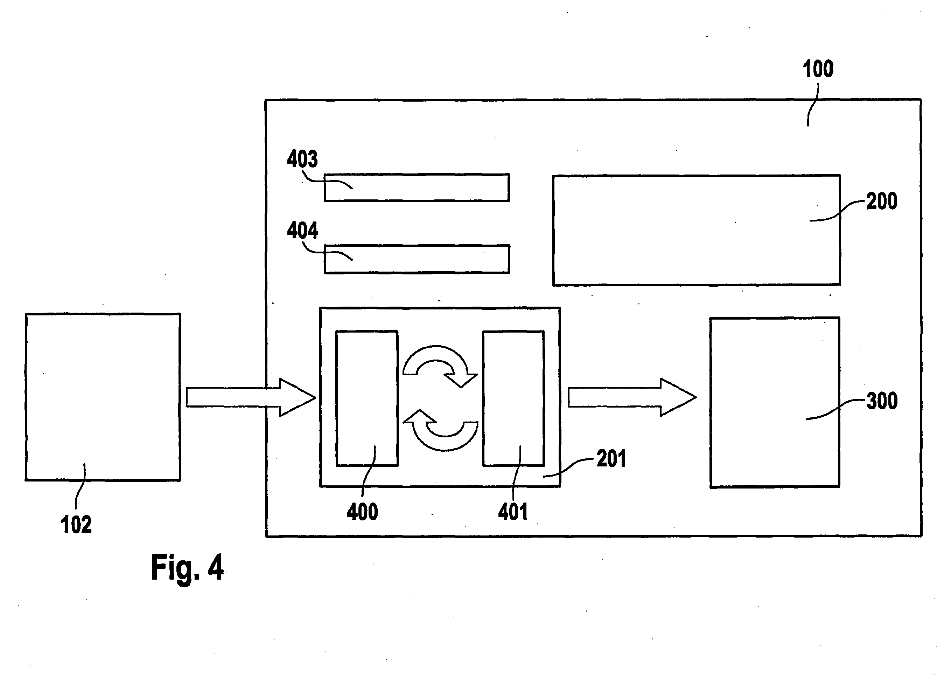

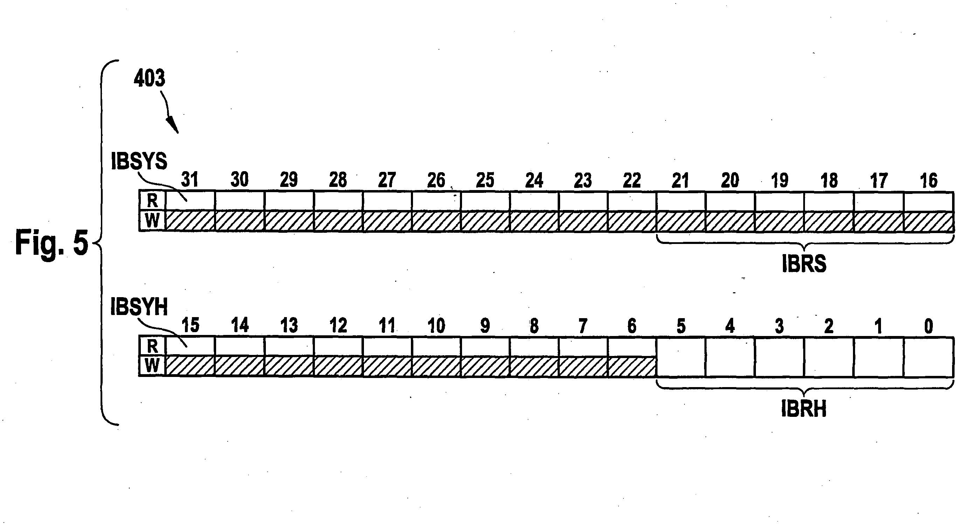

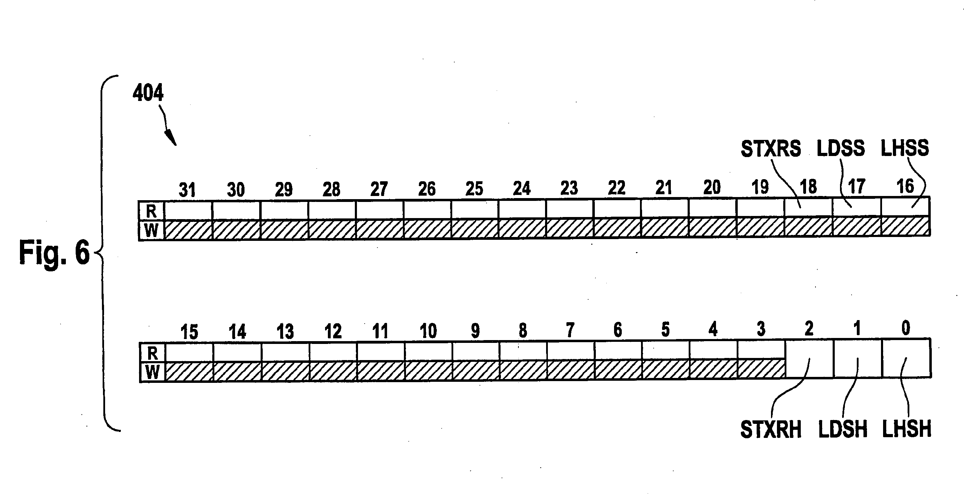

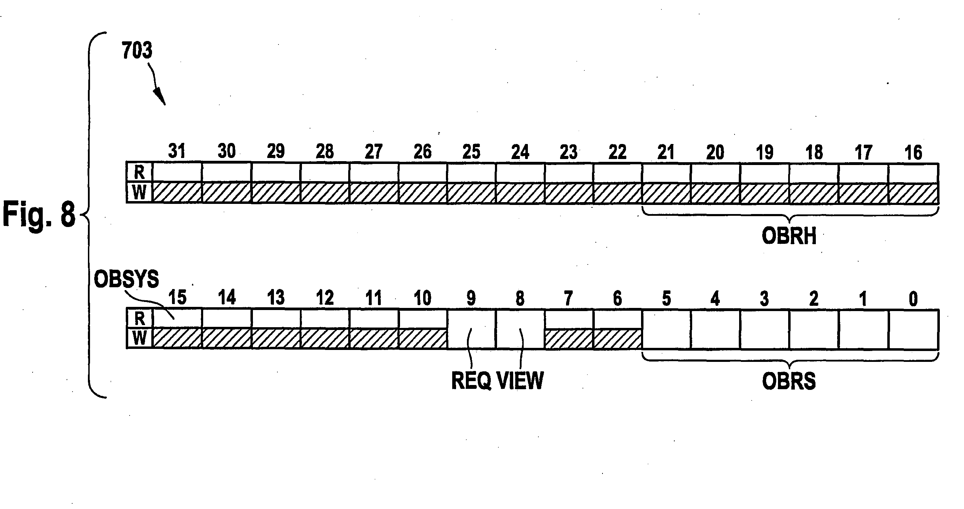

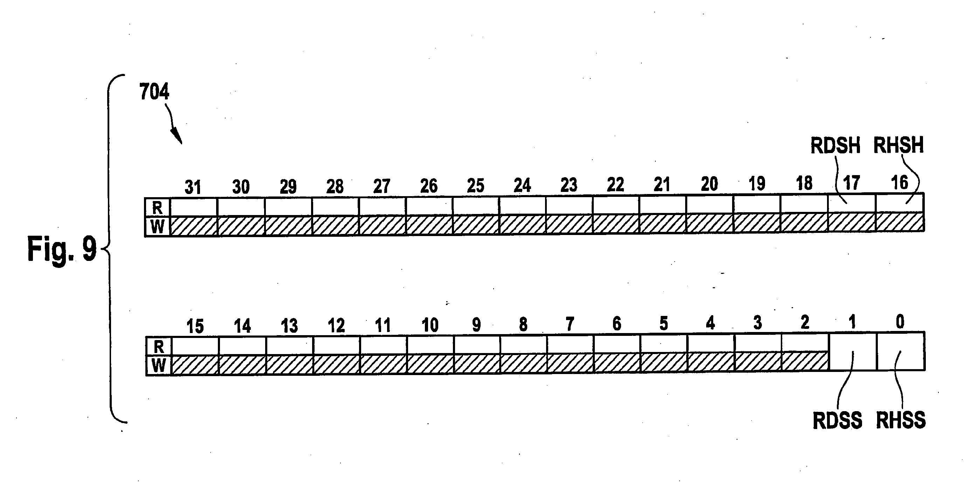

Eine externe CPU, also ein externer Prozessor der Teilnehmerprozessor 102 kann über die Teilnehmerschnittstelle, mit dem teilnehmerspezifischen Teil 204 direkt auf die Register des FlexRay-Kommunikationsbausteins zugreifen. Dabei wird eine Vielzahl von Registern verwendet. Diese Register werden eingesetzt, um die FlexRay Protokoll Controller, also die Schnittstellenbausteine 207 und 208 den Botschaftsverwalter (Message Handler MHD) 200, die globale Zeiteinheit (Global Time Unit GTU) 209, den allgemeinen Systemcontroller (System Universal Controller SUC) 210, die Netzwerk-und Fehlermanagementeinheit (Network und Error Management Unit NEM) 211, den Unterbrechungscontroller (Interrupt Controller INT) 212 sowie den Zugriff auf das Message RAM, also den Botschaftsspeicher 300 zu konfigurieren und zu steuern und ebenso den entsprechenden Status anzuzeigen. Zumindest auf Teile dieser Register wird noch in den Figuren 4 bis 6 und 7 bis 9 näher eingegangen. Ein solch beschriebener, erfindungsgemäßer FlexRay-Kommunikationsbaustein ermöglicht die einfache Umsetzung der FlexRay-Spezifikation v2.0, wodurch einfach ein ASIC oder ein Mikrocontroller mit entsprechender FlexRay-Funktionalität generiert werden kann.

In Figur 3 ist detailliert die Aufteilung des Botschaftsspeichers 300 beschrieben. Für die nach der FlexRay-Protokollspezifikation geforderte Funktionalität eines FlexRay-Kommunikationscontrollers wird ein Botschaftsspeicher für das Bereitstellen von zu sendenden Botschaften (Transmit Buffer) sowie das Abspeichern von fehlerfrei empfangenen Botschaften (Receive Buffer) benötigt. Ein FlexRay-Protokoll erlaubt Botschaften mit einem Datenbereich, also einem Payload-Bereich von 0 bis 254 Bytes. Wie in Figur 2 dargestellt ist der Botschaftsspeicher Teil des FlexRay-Kommunikationsbausteins 100. Das nachfolgend beschriebene Verfahren sowie der entsprechende Botschaftsspeicher beschreiben die Speicherung von zu sendenden Botschaften sowie von empfangenen Botschaften, insbesondere unter Verwendung eines Random Access Memory (RAM), wobei es durch den erfindungsgemäßen Mechanismus möglich ist in einem Botschaftsspeicher vorgegebener Größe eine variable Anzahl von Botschaften zu speichern. Dabei ist die Anzahl der speicherbaren Botschaften abhängig von der Größe der Datenbereiche der einzelnen Botschaften, wodurch zum einen die Größe des benötigten Speichers minimiert werden kann ohne die Größe der Datenbereiche der Botschaften einzuschränken und zum anderen eine optimale Ausnutzung des Speichers erfolgt. Im Folgenden nun soll diese variable Aufteilung eines insbesondere RAM-basierten Botschaftsspeichers für einen FlexRay Communication Controller näher beschrieben werden.

Zur Implementierung wird nun beispielhaft ein Botschaftsspeicher mit einer festgelegten Wortbreite von n Bit, beispielsweise 8,16, 32 usw., sowie einer vorgegebenen Speichertiefe von m Worten vorgegeben (m,n als natürliche Zahlen). Dabei wird der Botschaftsspeicher 300 in zwei Segmente aufgeteilt, ein Header Segment oder Kopfsegment HS und ein Datensegment DS (Payload Section, Payload Segment). Pro Botschaft wird somit ein Headerbereich HB und ein Datenbereich DB angelegt. Für Botschaften 0, 1 bis k (k als natürliche Zahl) werden somit Headerbereiche oder Kopfbereiche HB0, HB1 bis HBk und Datenbereiche DB0, DB1 bis DBk angelegt. In einer Botschaft wird also zwischen ersten und zweiten Daten unterschieden, wobei die ersten Daten Konfigurationsdaten und/oder Statusdaten bezüglich der FlexRay Botschaft entsprechen und jeweils in einem Headerbereich HB (HB0, HB1, ..., HBk) abgelegt werden. Die zweiten Daten, die den eigentlichen Daten entsprechen, die übertragen werden sollen, werden entsprechend in Datenbereichen DB (DB0 DB1, ... , DBk) abgelegt. Somit entsteht für die ersten Daten pro Botschaft ein erster Datenumfang (in Bit, Byte oder Speicherworten gemessen) und für die zweiten Daten einer Botschaft ein zweiter Datenumfang (ebenfalls in Bit, Byte oder Speicherworten gemessen), wobei der zweite Datenumfang pro Botschaft unterschiedlich sein kann. Die Aufteilung zwischen Kopfsegment HS und Datensegment DS ist nun im Botschaftsspeicher 300 variabel, d. h. es existiert keine vorgegebene Grenze zwischen den Bereichen. Die Aufteilung zwischen Kopfsegment HS und Datensegment DS ist erfindungsgemäß abhängig von der Anzahl k der Botschaften sowie dem zweiten Datenumfang, also dem Umfang der eigentlichen Daten, einer Botschaft bzw. aller k Botschaften zusammen. Erfindungsgemäß wird nun den Konfigurationsdaten KD0, KD1 bis KDk der jeweiligen Botschaft ein Zeigerelement oder Datapointer DP0, DP1 bis DPk jeweils direkt zugeordnet. In der speziellen Ausgestaltung wird jedem Kopfbereich HB0, HB1 bis HBk eine feste Anzahl von Speicherworten, hier zwei, zugeordnet, so dass immer ein Konfigurationsdatum KD (KD0, KD1, ..., KDk) und ein Zeigerelement DP (DP0, DP1, ..., DPk) zusammen in einem Headerbereich HB abgelegt sind. An diesem Kopfsegment HS mit den Headerbereichen HB, dessen Größe bzw. erster Datenumfang abhängig von der Anzahl k der zu speichernden Botschaften ist, schließt das Datensegment DS zur Speicherung der eigentlichen Botschaftsdaten D0, D1 bis Dk an. Dieses Datensegment (oder Datensection) DS hängt in seinem Datenumfang vom jeweiligen Datenumfang der abgelegten Botschafttsdaten ab, hier z.B. in DB0 sechs Worte, DB1 ein Wort und DBk zwei Worte. Die jeweiligen Zeigerelemente DP0, DP1 bis DPk zeigen somit immer zum Beginn, also auf die Anfangsadresse des jeweiligen Datenbereichs DB0, DB1 bis DBk, in denen die Daten D0, D1 bis Dk der jeweiligen Botschaften 0,1, bis k abgelegt sind. Damit ist die Aufteilung des Botschaftsspeichers zwischen Kopfsegment HS und Datensegment DS variabel und hängt von der Anzahl der Botschaften selbst sowie dem jeweiligen Datenumfang einer Botschaft und damit dem gesamten zweiten Datenumfang ab. Werden weniger Botschaften konfiguriert, wird das Kopfsegment kleiner und der frei werdende Bereich im Botschaftsspeicher kann als Zusatz zum Datensegment DS für die Speicherung von Daten verwendet werden. Durch diese Variabilität kann eine optimale Speicherausnutzung gewährleistet werden, womit auch die Verwendung kleinerer Speicher möglich ist. Das freie Datensegment FDS ,insbesondere dessen Größe, ebenfalls abhängig von der Kombination aus Anzahl k der gespeicherten Botschaften und dem jeweiligen zweiten Datenumfang der Botschaften ist somit minimal und kann sogar 0 werden.

Neben der Verwendung von Zeigerelementen ist es auch möglich, die ersten und zweiten Daten, also die Konfigurationsdaten KD (KD0, KD1, ..., KDk) und die eigentlichen Daten D (D=, D1, ... ,Dk) in einer vorgebbaren Reihenfolge abzulegen, so dass die Reihenfolge der Kopfbereiche HB0 bis HBk im Kopfsegment HS und die Reihenfolge der Datenbereiche DB0 bis DBk im Datensegment DS jeweils identisch ist Dann könnte unter Umständen sogar auf ein Zeigerelement verzichtet werden.

In einer besonderen Ausgestaltung ist dem Botschaftsspeicher ein Fehlerkennungserzeuger, insbesondere ein Parity-Bit-Generator-Element und ein Fehlerkennungsprüfer, insbesondere ein Parity-Bit-Prüf-Element zugeordnet, um die Korrektheit der gespeicherten Daten in HS und DS zu gewährleisten, indem pro Speicherwort oder pro Bereich (HB und/oder DB) eine Prüfsumme eben insbesondere als Parity-Bit mit abgelegt werden kann. Andere Kontrollkennungen, z.B. ein CRC (Cyclic redundancy check) oder auch Kennungen höherer Mächtigkeit wie ECC ( Error Code Correction) sind denkbar. Damit sind gegenüber einer festgelegten Aufteilung des Botschaftsspeichers folgende Vorteile gegeben:

Der Anwender kann bei der Programmierung entscheiden, ob er eine größere Anzahl von Botschaften mit kleinem Datenfeld oder ob er eine kleinere Anzahl von Botschaften mit großem Datenfeld verwenden möchte. Bei der Konfiguration von Botschaften mit unterschiedlich großem Datenbereich wird der vorhandene Speicherplatz optimal ausgenutzt. Der Anwender hat die Möglichkeit einen Datenspeicherbereich gemeinsam für unterschiedliche Botschaften zu nutzen.

Bei der Implementierung des Communication Controllers auf einer integrierten Schaltung kann die Größe des Botschaftsspeichers durch Anpassung der Speichertiefe des verwendeten Speichers an die Bedürfnisse der Applikation angepasst werden, ohne die sonstigen Funktionen des Communication Controllers zu ändern.

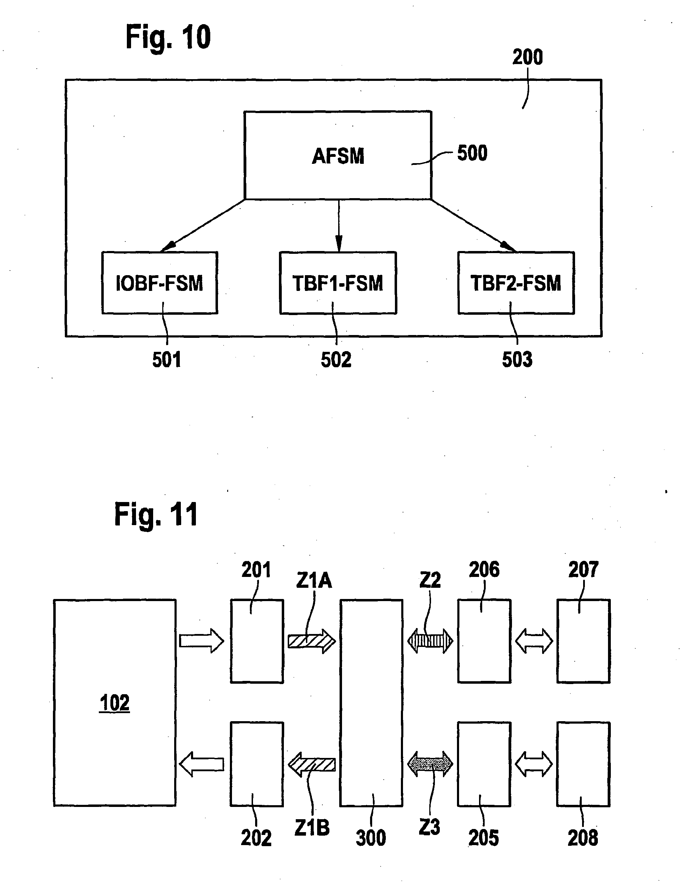

Im Weiteren wird nun anhand der Figuren 4 bis 6 sowie 7 bis 9 der Host-CPU-Zugriff, also Schreiben und Lesen von Konfigurationsdaten bzw. Statusdaten und der eigentlichen Daten über die Pufferspeicheranordnung 201 und 202 näher beschrieben. Dabei ist es das Ziel, eine Entkopplung bezüglich der Datenübertragung derart herzustellen, dass die Datenintegrität sichergestellt werden kann und gleichzeitig eine hohe Überlragungsgeschwindigkeit gewährleistet ist. Die Steuerung dieser Vorgänge erfolgt über den Botschaftsverwalter 200, was später noch näher in den Figuren 10,11 und 12 beschrieben wird. '

In den Figuren 4, 5 und 6 werden zunächst die Schreibzugriffe auf den Hotscha$sspeicher 300 durch die Host-CPU der Teilnehmer-CPU 102 über den Eingangspufferspeicher 201 näher erläutert. Dazu zeigt Figur 4 noch einmal den Kommunikationsbaustein 100, wobei aus Gründen der Übersichtlichkeit nur die hier relevanten Teile des Kommunikationsbausteins 100 gezeigt sind. Dies ist zum einen der für die Steuerung der Abläufe verantwortliche Botschaflsverwalter 200 sowie zwei Kontrollregister 403 und 404, die wie dargestellt außerhalb des Botschaftsverwalters 200 im Kommunikationsbaustein 100 untergebracht sein können, aber auch im Botschaftsverwalter 200 selbst enthalten sein können. 403 stellt dabei das Eingangs-Anforderungsregister (Input Buffer Command Request Register) dar und 404 das Eingangs-Maskierungsregister (Input Buffer Command Mask Register). Schreibzugriffe der Host-CPU 102 auf den Botschaftsspeicher 300 (Message RAM) erfolgen also über einen zwischengeschalteten Eingangspufferspeicher 201 (Input Buffer). Dieser Eingangspufferspeicher 201 ist nun geteilt bzw. gedoppelt ausgelegt, und zwar als Teilpufferspeicher 400 und einem zu dem Teilpufferspeicher zugehörigen Schattenspeicher 401. Damit kann wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung gewährleistet werden. Die Steuerung der Zugriffe erfolgt über das Eingangs-Anforderungsregister 403 und über das Eingangs-Maskierungsregister 404. Im Register 403 sind mit den Zahlen von 0 bis 31 die jeweiligen Bitstellen in 403 hier beispielhaft für eine Breite von 32 Bit dargestellt. Gleiches gilt für das Register 404 und die Bitstellen 0 bis 31 in 404.

Erfindungsgemäß erhalten nun beispielhaft die Bitstellen 0 bis 5,15,16 bis 21 und 31 des Registers 403 bezüglich der Ablaufsteuerung eine besondere Funktion. So ist in die Bitstellen 0 bis 5 des Registers 403 eine Kennung IBRH (Input Buffer Request Host) als Botschaftskennung eintragbar. Ebenso ist in die Bitstellen 16 bis 21 des Registers 403 eine Kennung IBRS (Input Buffer Request Shaddow) eintragbar. Ebenso sind in Registerstelle 15 von 403 IBSYH und in Registerstelle 31 von 403 IBSYS als Zugriffskennungen eingetragen. Ausgezeichnet sind auch die Stellen 0 bis 2 des Registers 404, wobei in 0 und 1 mit LHSH (Load Header Section Host) und LDSH (Load Data Section Host) weitere Kennungen als Datenkennungen eingetragen sind. Diese Datenkennungen sind hier in einfachster Form, nämlich jeweils als ein Bit ausgebildet, In Bitstelle 2 von Register 404 ist mit STXRH (Set Transmission X Request Host) eine Startkennung eingeschrieben.
Im Weiteren wird nun der Ablauf des Schreibzugriffs auf den Botschaftsspeicher über den Eingangspuffer beschrieben.

Die Host-CPU 102 schreibt die Daten der zu transferierenden Botschaft in den Eingangspufferspeicher 201. Dabei kann die Host-CPU 102 nur die Konfigurations- und Headerdaten KD einer Botschaft für das Headersegment HS des Botschaftsspeichers oder nur die, eigentlichen, zu übertragenden Daten D einer Botschaft für das Datensegment DS des Botschaftsspeichers oder beide schreiben. Welcher Teil einer Botschaft also Konfigurationsdaten und/oder die eigentlichen Daten übertragen werden soll, wird durch die speziellen Datenkennungen LHSH und LDSH im Eingangs-Markierungsregister 404 festgelegt. Dabei wird durch LHSH (Load Header Section Host) festgelegt ob die Headerdaten, also die Konfigurationsdaten KD, übertragen werden und durch LDSH (Load Data Section Host) festgelegt, ob die Daten D übertragen werden sollen. Dadurch, dass der Eingangspufferspeicher 201 zweiteilig mit einem Teil des Pufferspeichers 400 und einem dazugehörigen Schattenspeicher 401 ausgebildet ist und ein wechselseitiger Zugriff erfolgen soll sind als Gegenstück zu LHSH und LDSH zwei weitere Datenkennungsbereiche vorgesehen, die nun auf den Schattenspeicher 401 bezogen sind. Diese Datenkennungen in den Bitstellen 16 und 17 des Registers 404 sind mit LHSS (Load Header Section Shadow) und LDSS (Load Data Section Shadow) bezeichnet. Durch diese wird somit der Übertragungsvorgang bezüglich des Schattenspeichers 401 gesteuert.

Ist nun das Startbit bzw. die Startkennung STXRH (Set Transmission X Request Host) in Bitstelle 2 des Eingangs-Maskierungsregisters 404 gesetzt, so wird nach erfolgtem Transfer der jeweils zu übertragenden Konfigurationsdaten und/oder eigentlichen Daten in den Botschaftsspeicher 300 automatisch eine Sendeanforderung (Transmission Request) für das entsprechende Botschaflsobjekt gesetzt. D. h. durch diese Startkennung STXRH wird das automatische Senden eines übertragenden Botschaftsobjekts gesteuert, insbesondere gestartet.

Das Gegenstück hierzu entsprechend für den Schattenspeicher ist die Startkennung STXRS (Set Transmission X Request Shadow) welches beispielhaft in Bitstelle 18 des Eingangs-Markierungsregisters 404 enthalten ist und auch hier im einfachsten Fall eben als ein Bit ausgebildet ist. Die Funktion von STXRS ist analog der Funktion von STXRH, lediglich bezogen auf den Schattenspeicher 1.

Wenn die Host-CPU 102 die Botschaftskennung, insbesondere die Nummer des Botschaftsobjekts im Botschaftsspeicher 300 in welches die Daten des Eingangspufferspeichers 201 transferiert werden sollen in die Bitstellen 0 bis 5 des Eingangs-Anforderungsregisters 403, also nach IBRH schreibt werden der Teilpufferspeicher 400 des Eingangspufferspeichers 201 und der zugehörige Schattenspeicher 401 vertauscht bzw. es wird der jeweilige Zugriff von Host-CPU 102 und Botschaftsspeicher 300 auf die beiden Teilspeicher 400 und 401 vertauscht, wie durch die halbkreisförmigen Pfeile angedeutet. Dabei wird z.B. auch der Datentransfer, also die Datenübertragung zum Botschaftsspeicher 300 gestartet. Die Datenübertragung zum Botschaftsspeicher 300 selbst erfolgt aus dem Schattenspeicher 401. Gleichzeitig werden die Registerbereiche IBRH und IBRS getauscht. Ebenso getauscht werden LHSH und LDSH gegen LHSS und LDSS. Gleichermaßen getauscht wird STXRH mit STXRS. IBRS zeigt somit die Kennung der Botschaft, also die Nummer des Botschaftsobjektes für das eine Übertragung, also ein Transfer aus dem Schattenspeicher 401 im Gange ist bzw. welches Botschaftsobjekt, also welcher Bereich im Botschaftsspeicher als letztes Daten (KD und/oder D) aus dem Schattenspeicher 401 erhalten hat. Durch die Kennung (hier wieder beispielsweise 1 Bit) IBSYS (Input Buffer Busy Shadow) in Bitstelle 31 des Eingangs-Anforderungsregisters 403 wird angezeigt ob gerade eine Übertragung mit Beteiligung des Schattenspeichers 401 erfolgt. So wird beispielsweise bei IBSYS=1 gerade aus dem Schattenspeicher 401 übertragen und bei IBSYS=0 eben nicht Dieses Bit IBSYS wird beispielsweise durch das Schreiben von IBRH also Bitstellen 0 bis 5 in Register 403 gesetzt, um anzuzeigen, dass ein Transfer zwischen dem Schattenspeicher 401 und dem Botschaftsspeicher 300 im Gange ist. Nach Beendigung dieser Datenübertragung zum Botschaftsspeicher 300 wird IBSYS wieder zurückgesetzt.

Während der Datentransfer aus dem Schattenspeicher 401 gerade läuft kann die Host-CPU 102 die nächste zu transferierende Botschaft in den Eingangspufferspeicher bzw. in den Teilpufferspeicher 400 schreiben. Mit Hilfe einer weiteren Zugriffskennung IBSYH (Input Buffer Busy Host) beispielsweise in Bitstelle 15 von Register 403 kann die Kennung noch weiter verfeinert werden. Schreibt die Host-CPU 102 gerade IBRH, also die Bitstellen 0 bis 5 von Register 403 während eine Übertragung zwischen dem Schattenspeicher 401 und dem Botschaftsspeicher 300 läuft, also IBSYS=1 ist, so wird IBSYH im Eingangs-Anforderungsregister 403 gesetzt. Sobald der laufende Transfer also die laufende Übertragung abgeschlossen ist, wird der angeforderte Transfer (Anforderung durch STXRH siehe oben) gestartet und das Bit IBSYH zurückgesetzt. Das Bit IBSYS bleibt während der ganzen Zeit gesetzt, um anzuzeigen, dass Daten zum Botschaftsspeicher transferiert werden. Alle verwendeten Bits aller Ausführungsbeispiele können dabei auch als Kennungen mit mehr als einem Bit ausgebildet sein. Vorteilhaft ist die Ein-Bit Lösung aus speicher- und verarbeitungsökonomischen Gründen.

Der so beschriebene Mechanismus erlaubt es der Host-CPU 102 kontinuierlich Daten in die im Botschaftsspeicher befindlichen Botschaftsobjekte bestehend aus Headerbereich HB und Datenbereich DB zu transferieren, vorrausgesetzt die Zugriffsgeschwindigkeit der Host-CPU 102 auf den Eingangspufferspeicher ist kleiner oder gleich der internen Datentransferrate des FIexRay-IP-Moduls also des Kommunikationsbausteins 100.

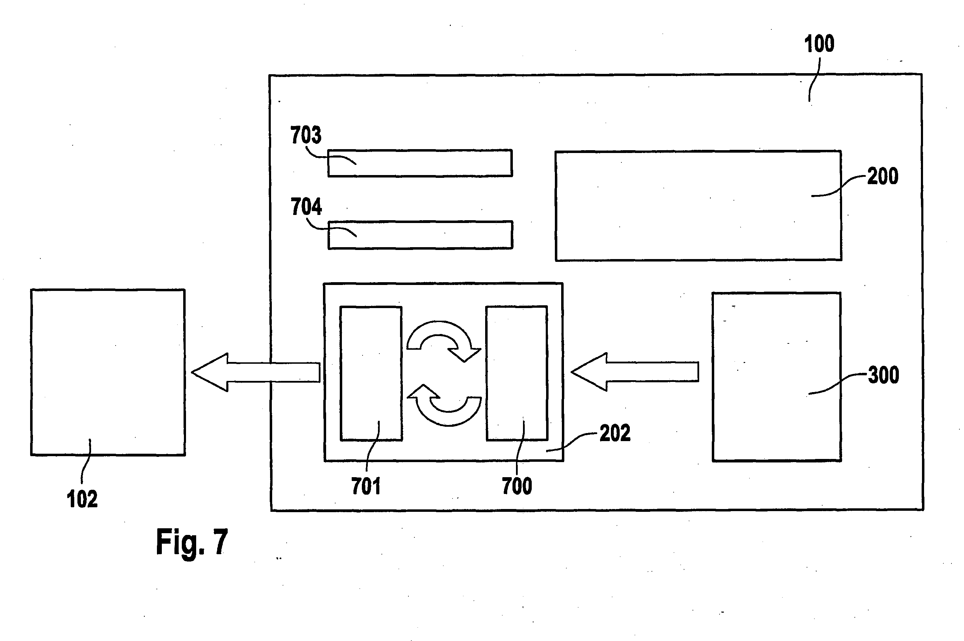

In den Figuren 7, 8 und 9 werden nun die Lesezugriffe auf den Botschaftsspeicher 300 durch die Host-CPU oder Teilnehmer-CPU 102 über den Ausgangspufferspeicher oder Ausgabepufferspeicher 202 näher erläutert. Dazu zeigt Figur 7 noch einmal den ' Kommunücationsbaustein 100, wobei aus Gründen der Übersichtlichkeit auch hier nur die relevanten Teile des Kommunikationsbausteins 100 gezeigt sind. Dies ist zum einen der für die Steuerung der Abläufe verantwortliche Botschaftsverwalter 200 sowie zwei Kontrolkegister 703 und 704, die wie dargestellt außerhalb des Botschaftsverwalter 300 im Kommunikationsbaustein 100 untergebracht sein können, aber auch im Botschaftsverwalter 200 selbst enthalten sein können. 703 stellt dabei das Ausgangs-Anforderungsregister (Output Buffer Command Request Register) dar und 704 das Ausgangs-Maskierungsregister (Output Buffer Command Mask Register). Lesezugriffe der Host-CPU 102 auf den Botschaftsspeicher 300 erfolgen also über den zwischengeschalteten Ausgangspufferspeicher 202 (Output Buffer). Dieser Ausgangspufferspeicher 202 ist nun ebenfalls geteilt bzw. gedoppelt ausgelegt, und zwar als Teilpufferspeicher 701 und einem zu dem Teilpufferspeicher zugehörigen Schattenspeicher 700. Damit kann auch hier wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung nun in der Gegenrichtung vom Botschaflsspeicher zum Host gewährleistet werden. Die Steuerung der Zugriffe erfolgt über das Ausgangs-Anforderungsregister 703 und über das Eingangs-Maskierungsregister 704. Auch im Register 703 sind mit den Zahlen von 0 bis 31 die jeweiligen Bitstellen in 703 hier beispielhaft für eine Breite von 32 Bit dargestellt. Gleiches gilt für das Register 704 und die Bitstellen 0 bis 31 in 704.

Erfindungsgemäß erhalten nun beispielhaft die Bitstellen 0 bis 5, 8 und 9,15 und 16 bis 21 des Registers 703 bezüglich der Ablaufsteuerung des Lesezugriffs eine besondere Funktion. So ist in die Bitstellen 0 bis 5 des Registers 703 eine Kennung OBRS (Output Buffer Request Shadow) als Botschaftskennung eintragbar. Ebenso ist in die Bitstellen 16 bis 21 des Registers 703 eine Kennung OBRH (Output Buffer Request Host) eintragbar. Als Zugriffskennung ist in Bitstelle 15 von Register 703 eine Kennung OBSYS (Output Buffer Busy Shadow) eintragbar. Ausgezeichnet sind auch die Stellen 0 und 1 des Ausgabe-Maskierungsregisters 704, wobei in den Bitstellen 0 und 1 mit RDSS (Read Data Section Shadow) und RHSS (Read Header Section Shadow) weitere Kennungen als Datenkennungen eingetragen sind. Weitere Datenkennungen sind beispielsweise in den Bitstellen 16 und 17 mit RDSH (Read Data Section Host) und RHSH (Read Header Section Host) vorgesehen. Diese Datenkennungen sind auch hier beispielhaft in einfachster Form, nämlich jeweils als ein Bit ausgebildet. In Bitstelle 9 des Registers 703 ist eine Startkennung REQ eingetragen. Weiterhin ist eine Umschaltkennung VIEW vorgesehen die beispielhaft in Bitstelle 8 von Register 703 eingetragen ist.

Die Host-CPU 102 fordert die Daten eines Botschaftsobjekts aus dem Botschaftsspeicher 300 an, indem sie die Kennung der gewünschten Botschaft, also insbesondere die Nummer des gewünschten Botschaftsobjektes, nach OBRS also in die Bitstellen 0 bis 5 des Registers 703 schreibt. Auch hierbei kann die Host-CPU wie in der Gegenrichtung entweder nur die Status- bzw. Konfigurations- und Headerdaten KD einer Botschaft also aus einem Headerbereich oder nur die eigentlich zu übertragenden Daten D einer Botschaft also aus dem Datenbereich oder auch beide lesen. Welcher Teil der Daten also aus Headerbereich und/oder Datenbereich übertragen werden soll wird hierbei vergleichbar mit der Gegenrichtung durch RHSS und RDSS festgelegt. Das heißt RHSS gibt an, ob die Headerdaten gelesen werden sollen und RDSS gibt an, ob die eigentlichen Daten gelesen werden sollen.

Eine Startkennung dient dazu die Übertragung vom Botschaflsspeicher zum Schattenspeicher 700 zu starten. D.h. wird als Kennung wie im einfachsten Fall ein Bit verwendet, wird durch Setzen von Bit REQ in Bitstelle 9 im Ausgabe-Anforderungsregister 703 die Übertragung vom Botschaftsspeicher 300 zum Schattenspeicher 700 gestartet. Die laufende Übertragung wird wieder durch eine Zugriffskennung, hier wieder im einfachsten Fall durch ein Bit OBSYS im Register 703 angezeigt. Um Kollisionen zu vermeiden ist es vorteilhaft, wenn das Bit REQ nur dann gesetzt werden kann, wenn OBSYS nicht gesetzt ist also gerade keine laufende Übertragung erfolgt. Hier erfolgt dann auch der Botschaftstransfer zwischen dem Botschaftsspeicher 300 und dem Schattenspeicher 700. Der eigentliche Ablauf könnte nun einerseits vergleichbar zur Gegenrichtung wie unter den Figuren 4, 5 und 6 beschrieben gesteuert werden (komplementäre Registerbelegung) und erfolgen oder aber in einer Variation durch eine zusätzliche Kennung, nämlich eine Umschaltkennung VIEW in Bistelle 8 des Registers 703. D.h. nach Abschluss der Übertragung wird das Bit OBSYS zurückgesetzt und durch Setzen des Bits VIEW im Ansgabe-Anforderungsregister 703 werden der Teilpufferspeicher 701 und der zugehörige Schattenspeicher 700 getauscht bzw. es werden die Zugriffe darauf getauscht und die Host-CPU 102 kann nun das vom Botschaftsspeicher angeforderte Botschaftsobjekt also die entsprechende Botschaft aus dem Teilpufferspeicher 701 auslesen. Dabei werden auch hier vergleichbar mit der Gegenübertragungsrichtung in den Figuren 4 bist 6 die Registerzellen OBRS und OBRH getauscht. Gleichermaßen werden RHSS und RDSS gegen RHSH und RDSH getauscht. Als Schutzmechanismus kann auch hier vorgesehen werden, dass das Bit VIEW nur dann gesetzt werden kann, wenn OBSYS nicht gesetzt ist, also keine laufende Übertragung stattfindet.

Somit erfolgen Lesezugriffe der Host-CPU 102 auf den Botschaftsspeicher 300 über einen zwischengeschalteten Ausgangspufferspeicher 202. Dieser Ausgangspufferspeicher ist ebenso wie der Eingangspufferspeicher doppelt bzw. zweiteilig ausgelegt um einen kontinuierlichen Zugriff der Host-CPU 102 auf die Botschaftsobjekte die im Botschaftsspeicher 300 abgelegt sind zu gewährleisten. Auch hier werden die Vorteile der hohen Datenintegrität und der beschleunigten Übertragung erzielt

Durch die Verwendung der beschriebenen Eingangs- und Ausgangspuffer wird sichergestellt, dass eine Host-CPU trotz der modulinternen Latenzzeiten unterbrechungsfrei auf den Botschaftsspeicher zugreifen kann.

Zur Sicherstellung dieser Datenintegrität wird die Datenübertragung, insbesondere die Weiterleitung im Kommunikationsbaustein 100 durch den Botschaftsverwalter 200 (Message Handler MHD) vorgenommen. Dazu ist in Figur 10 der Botschaftsverwalter 200 dargestellt. Der Botschaftsverwalter ist in seiner Funktionalität durch mehrere Zustandsmaschinen oder Zustandsautomaten, also endliche Automaten, sogenannte Finite-State-Maschinen (FSM) darstellbar. Dabei sind wenigstens drei Zustandsmaschinen und in einer besonderen Ausführungsform vier Finite-State-Maschinen vorgesehen. Eine erste Finit-State-Maschine ist die IOBF-FSM und mit 501 bezeichnet (Input/Output Buffer State Machine). Diese IOBF-FSM könnte auch je Übertragungsrichtung bezüglich des Eingangspuff'erspeichers oder des Ausgangspufferspeichers in zwei Finite-State-Maschinen aufgeteilt sein IBF-FSM (Input Buffer FSM) und OBF-FSM (Output Buffer FSM), womit maximal fünf Zustandsautomaten (IBF-FSM, OBF-FSM, TBF1-FSM, TBF2-FSM, AFSM) denkbar wären. Bevorzugt ist aber eine gemeinsame IOBF-FSM vorzusehen. Eine wenigstens zweite Finite-State-Maschine ist hier im Zuge des bevorzugten Ausfuhrungsbeispiels in zwei Blöcke 502 und 503 aufgeteilt und bedient die beiden Kanäle A und B bezüglich der Speicher 205 und 206, wie zu Fig. 2 beschrieben. Dabei kann eine Finite-State-Maschine vorgesehen sein um beide Kanäle A und B zu bedienen oder aber wie in der bevorzugten Form eine Finit-State-Maschine TBF1-FSM mit 502 bezeichnet (Transient Buffer 1 (206, RAM A) State Machine) für Kanal A und für Kanal B eine TBF2-FSM mit 503 bezeichnet (Transient Buffer 2 (205, RAM B) State Machine).

Zur Steuerung des Zugriffs der drei Finite-State-Maschinen 501-503 im bevorzugten Ausführungsbeispiel dient eine Arbiter-Finite-State-Maschine, die sogenannte AFSM, die mit 500 bezeichnet ist. Die Daten (KD und/oder D) werden in einem durch ein Taktmittel, wie z.B. ein VCO (Voltage controlled oszillator), einen Schwingquarz usw. generierten oder aus diesem angepassten Takt im Kommunikationsbaustein übertragen. Der Takt T kann dabei im Baustein genereirt werden oder von außen, z.B. als Bustakt vorgegeben sein. Diese Arbiter-Finite-State-Maschine AFSM 500 gibt abwechselnd einer der drei Finit-State-Maschinen 501-503, insbesondere jeweils für eine Taktperiode T Zugriff auf den Botschaftsspeicher. D.h. die zur Verfügung stehende Zeit wird entsprechend den Zugriffsanforderungen der einzelnen Zustandsautomaten 501, 502, 503 auf diese anfordernden Zustandsautomaten aufgeteilt. Erfolgt eine Zugriffsanforderung von nur einer Finite-State-Machine, so erhält diese 100% der Zugriffszeit, also alle Takte T. Erfolgt eine Zugriffsanforderung von zwei Zustandsautomaten, erhält jede Finite-State-Machine 50% der Zugriffszeit. Erfolgt schließlich eine Zugriffsanforderung von drei Zustandsautomaten so erhält jede der Finite-State-Maschinen 1/3 der Zugriffszeit. Dadurch wird die jeweils zur Verfügung stehende Bandbreite optimal genutzt.

Die erste Finite-State-Machine mit 501 bezeichnet, also IOBF-FSM führt bei Bedarf folgende Aktionen aus:
- Datentransfer vom Eingangspufferspeicher 201 zum ausgewählten Botschaflsobjekt im Botschaftsspeicher 300.
- Datentransfer vom ausgewählten Botschaftsobjekt im Botschaflsspeicher 300 zum Ausgangspufferspeicher 202.

Die Zustandsmaschine für Kanal A 502, also TBF1FSM, führt folgende Aktionen aus:
- Datentransfer vom ausgewählten Botschaftsobjekt im Botschaftsspeicher 300 zum Pufferspeicher 206 von Kanal A.
- Datentransfer vom Pufferspeicher 206 zum ausgewählten Botschaftsobjekt im Botschaftsspeicher 300.
- Suche nach dem passenden Botschaftsobjekt im Botschaffisspeicher, wobei bei Empfang das Botschaftsobjekt (Receive Buffer) zum Abspeichern einer auf Kanal A empfangenen ' Botschaft im Rahmen einer Akzeptanzfilterung gesucht wird und beim Senden das nächste auf Kanal A zu sendende Botschaftsobjekt (Transmit Buffer).

Analog dazu ist die Aktion von TBF2-FSM, also der Finit-State-Machine für Kanal B in Block 503. Diese führt den Datentransfer vom ausgewählten Botschaftsobjekt im Botschaftsspeicher 300 zum Pufferspeicher 205 von Kanal B aus und den Datentransfer vom Pufferspeicher 205 zum ausgewählten Botschaftsobjekt im Botschaftsspeicher 300. Auch die Suchfunktion ist analog zu TBF1-FSM nach einem passenden Botschaftsobjekt im Botschaftsspeicher, wobei bei Empfang das Botschaftsobjekt (Receive Buffer) zum Abspeichern einer auf Kanal B empfangenen Botschaft im Rahmen einer Akzeptanzfilterung gesucht wird und beim Senden die nächste auf Kanal B zu sendende Botschaft oder Botschaftsobjekt (Transmit Buffer).

In Figur 11 sind nun noch einmal die Abläufe und die Übertragungswege dargestellt. Die drei Zustandsmaschinen 501-503 steuern die jeweiligen Datenübertragungen zwischen den einzelnen Teilen. Dabei ist mit 102 wieder die Host-CPU dargestellt, mit 201 der Eingangspufferspeicher und mit 202 der Ausgangspufferspeicher. Mit 300 ist der Botschaflsspeicher dargestellt und die beiden Pufferspeicher für Kanal A und Kanal B mit 206 und 205. Die Schnittstellenelemente 207 und 208 sind ebenfalls dargestellt. Der erste Zustandsautomat IOBF-FSM, mit 501 bezeichnet steuert den Datentransfer Z1A und Z1B, also vom Eingangspufferspeicher 201 zum Botschaftsspeicher 300 und vom Botschaftsspeicher 300 zum Ausgangspufferspeicher 202. Die Datenübertragung erfolgt dabei über Datenbusse mit einer Wortbreite von beispielsweise 32 Bit wobei auch jede andere Bitzahl möglich ist Gleiches gilt für die Übertragung Z2 zwischen dem Botschaftsspeicher und dem Pufferspeicher 206. Diese Datenübertragung wird durch TBF1-FSM, also 502 die Zustandsmaschine für Kanal A, gesteuert. Die Übertragung Z3 zwischen Botschaftsspeicher 300 und Pufferspeicher 205 wird durch den Zustandsautomaten TBF2-FSM, also 503 gesteuert. Auch hier erfolgt der Datenü-ansfer über Datenbusse mit einer beispielhaften Wordbreite von 32 Bit, wobei auch hier jede andere Bitzahl möglich ist. Normalerweise benötigt der Transfer eines kompletten Botschaftsobjektes über die genannten Übertragungswege mehrere Taktperioden T. Daher erfolgt eine Aufteilung der Übertragungszeit bezogen auf die Taktperioden T durch den Arbiter, also die AFSM 500. In Figur 11 sind also die Datenpfade zwischen denen vom Message Handler kontrollierten Speicherkomponenten dargestellt Um die Datenintegrität der im Botschaftsspeicher gespeicherten Botschaftsobjekte sicherzustellen, sollten vorteilhafterweise zur gleichen Zeit nur auf einem der dargestellten Pfade also Z1A und Z1B sowie Z2 und Z3 gleichzeitig Daten ausgetauscht werden.

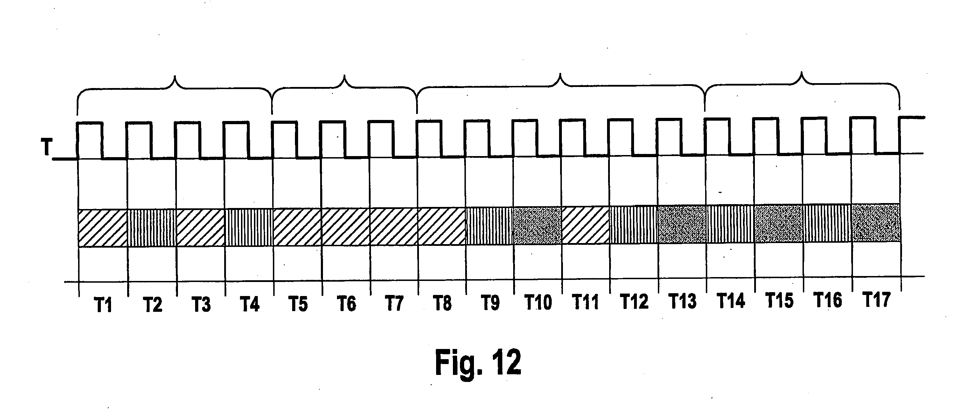

In Abbildung 12 ist an einem Beispiel gezeigt, wie die zur Verfügung stehenden Systemtakte T vom Arbiter, also der AFSM 500, auf die drei anfordernden Zustandsautomaten aufgeteilt werden. In Phase 1 erfolgen Zugriffsanforderungen von Zustandsautomat 501 und Zustandsautomat 502, d.h., dass die gesamte Zeit jeweils zur Hälfte auf die beiden anfordernden Zustandautomaten aufgeteilt wird. Bezogen auf die Taktperioden in Phase 1 bedeutet dies, dass Zustandsautomat 501 in den Taktperioden T1 und T3 Zugrifferhält und Zustandsautomat 502 in den Taktperioden T2 und T4. In Phase 2 erfolgt der Zugriff nur durch die Zustandsmaschine 501, sodass alle drei Taklperioden, also 100% der Zugriffszeit von T5 bis T7 auf IOBF-FSM entfällt. In Phase 3 erfolgen Zugriffsanforderungen aller drei Zustandsautomaten 501 bis 503, sodass eine Drittelung der Gesamtzugriffszeit erfolgt. Der Arbiter AFSM verteilt dann die Zugriffszeit beispielsweise so, dass in den Taktperioden T8 und T11 die Finit-State-Maschine 501, in den Taktperioden T9 und T12 die Finite-State-Maschine 502 und in den Taktperioden T10 und T13 die Finit-State-Maschine 503 Zugriff erhält. In Phase 4 schließlich erfolgt der Zugriff durch zwei Zustandsautomaten, 502 und 503 auf den beiden Kanälen A und B des Kommunikationsbausteins, sodass eine Zugriffsverteilung der Taktperioden T14 und T16 an Finite-State-Machine 502 und in T15 und T17 an Finite-State-Machine 503 erfolgt.

Der Arbiterzustandsautomat AFSM 500 sorgt also dafür, dass für den Fall wenn mehr als eine der drei Zustandsmaschinen eine Anforderung für einen Zugriff auf den Botschaftsspeicher 300 stellt, der Zugriff taktweise und abwechselnd auf die anfordernden Zustandsmaschinen aufgeteilt wird. Diese Vorgehensweise stellt die Integrität der im Botschaftsspeicher abgelegten Botschaftsobjekte, also die Datenintegrität, sicher. Will zum Beispiel die Host-CPU 102 über den Ausgangspufferspeicher 202 ein Botschaftsobjekt auslesen während gerade eine empfangene Botschaft in dieses Botschaftsobjekt geschrieben wird, so wird abhängig davon welche Anforderung zuerst gestartet wurde entweder der alte Stand oder der neue Stand ausgelesen, ohne das die Zugriffe im Botschaftsobjekt im Botschaftsspeicher selbst kollidieren.

Das beschriebene Verfahren ermöglicht der Host-CPU im laufenden Betrieb jedes beliebige Botschaftsobjekt im Botschaftsspeicher zu lesen oder zu schreiben, ohne dass das ausgewählte Botschaftsobjekt für die Dauer des Zugriffs der Host-CPU von der Teilnahme am Datenaustausch auf beiden Kanälen des FlexRay Busses gesperrt wäre (Buffer Locking). Gleichzeitig wird durch die taktweise Verschachtelung der Zugriffe die Integrität der im Botschaftsspeicher abgelegten Daten sichergestellt und die Überlragungsgeschwindigkeit, auch durch Ausnutzung der vollen Bandbreite erhöht.

## Patentansprüche

1. Botschaftsspeicher in einem Kommunikationsbaustein (100) zur Speicherung einer Anzahl von Botschaften, wobei in den zu speichernden Botschaften erste Daten (KD0, KD1, KDk) mit einem ersten Datenumfang und zweite Daten (D0, D1, Dk) mit einem zweiten , Datenumfang enthalten sind, wobei der zweite Datenumfang pro Botschaft unterschiedlich sein kann und der Botschaftsspeicher (300) ein Kopfsegment (HS) enthält, in dem die ersten Daten (KD0 KD1, KDk) der Botschaft in je einem Kopfbereich (HB0, HB1, HBk) pro Botschaft gespeichert werden und der Botschafts-speicher (300) ein Datensegment (DS) enthält, in dem die zweiten Daten (D0, D1, Dk) der Botschaft in je einem Datenbereich (DB0, DB1, DBk) pro Botschaft gespeichert werden, **dadurch gekennzeichnet daß** der Botschaftsspeicher (300) derart ausgestaltet ist, dass eine Aufteilung zwischen dem,Kopfsegment (HS) und dem Datensegment (DS) variabel, abhängig von der Anzahl (k) der Botschaften und dem zweiten Datenumfang ist

2. Botschaftsspeicher nach Anspruch 1, **dadurch gekennzeichnet, dass** im Kopfsegment (HS) in jedem Kopfbereich (HB0, HB 1, HBk) ein Zeigerelement (DP0, DP1, DPk) pro Botschaft vorgesehen ist, durch welches ein Datenbereich (DB0, DB 1, DBk) im Datensegment (DS) bestimmt wird.

3. Botschaftsspeicher nach Anspruch 1, **dadurch gekennzeichnet, dass** die ersten und zweiten Daten der Botschaften in einer vorgebbaren Reihenfolge gespeichert werden, wobei die Reihenfolge der Kopfbereiche (HB0, HB1, HBk) im Kopfsegment (HS) und die Reihenfolge der Datenbereiche (DB0, DB1, DBk) im Datensegment (DS) jeweils identisch ist.

4. Botschaftsspeicher nach Anspruch 1, **dadurch gekennzeichnet, dass** der Botschaftsspeicher als FIFO Speicher ausgebildet ist.

5. Botschaftsspeicher nach Anspruch 1, **dadurch gekennzeichnet, dass** die ersten Daten (KD0, KD1, KDk) der Botschaft in je einem Kopfbereich (HB0, HB1, HBk) pro Botschaft und mit einer für jeden Kopfbereich (HB0, HB1, HBk) identisch vorgegebenen ersten Anzahl von Speicherworten gespeichert werden.

6. Botschaftsspeicher nach Anspruch 5, **dadurch gekennzeichnet, dass** dieser mit einer vorgegebenen, festen Speicherwortbreite ausgebildet ist.

7. Botschaftsspeicher nach Anspruch 1, **dadurch gekennzeichnet, dass** der Kopfbereich (HS) und der Datenbereich (DS) unmittelbar aufeinander folgen.

8. Botschaftsspeicher nach Anspruch 1, **dadurch gekennzeichnet, dass** diesem ein Parity-Bit-Generator-Element und ein Parity-Bit Prüf Element zugeordnet ist

9. Botschaftsspeicher nach Anspruch 1, **dadurch gekennzeichnet, dass** jeder Datenbereich wenigstens eine vorgegebene Speicherwortbreite umfasst und pro Speicherwortbreite eine Kontrollkennung im Datenbereich, insbesondere ein Parity Bit, vorgesehen ist.

10. Flex-Ray-Kommunikationsbaustein mit einem Botschaftsspeicher nach Anspruch 1.

11. Steuergerät mit einem Flex-Ray-Kommunikationsbaustein, welcher einen Botschaftsspeicher nach Anspruch 1 enthält

12. Verfahren zur Speicherung einer Anzahl von Botschaften in einem Hotschaftsspeicher in einem Kommunikationsbaustein (100), wobei in den zu speichernden Botschaften erste Daten (KD0, KD1, KDk) mit einem ersten Datenumfang und zweite Daten (D0, D1, Dk) mit einem zweiten Datenumfang enthalten sind, wobei der zweite Datenumfang pro Botschaft unterschiedlich sein kann und die ersten Daten (KD0, KD1, KDk) in ein Kopfsegment (HS) des Botschaftsspeichers in je einem Kopfbereich (HB0, HB1, HBk) pro Botschaft gespeichert werden, und die zweiten Daten (D0, D1, Dk) in ein Datensegment (DS) in je einem Datenbereich (DB0, DB1, DBk) pro Botschaft gespeichert werden, **dadurch gekennzeichnet daß** eine Aufteilung zwischen dem Kopfsegment (HS) und dem Datensegment (DS) variabel, abhängig von der Anzahl (k) der Botschaften und dem zweiten Datenumfang durchgeführt wird.

## Claims

1. Message memory in a communication module (100) for storing a number of messages, first data (KD0, KD1, KDk) having a first data volume and second data (D0, D1, Dk) having a second data volume being contained in the messages to be stored, the second data volume being able to be different for each message, and the message memory (300) containing a header segment (HS) in which the first data (KD0, KD1, KDk) of the message are stored in a respective header area (HBO, HB1, HBk) for each message, and the message memory (300) containing a data segment (DS) in which the second data (D0, D1, Dk) of the message are stored in a respective data area (DBO, DB1, DBk) for each message, **characterized in that** the message memory (300) is configured in such a manner that a partition between the header segment (HS) and the data segment (DS) can be varied depending on the number (k) of messages and the second data volume.

2. Message memory according to Claim 1, **characterized in that** a pointer element (DPO, DP1,-DPk) is provided in each header area (HBO, HB1, HBk) in the header segment (HS) for each message, said pointer element determining a data area (DBO, DB1, DBk) in the data segment (DS).

3. Message memory according to Claim 1, **characterized in that** the first and second data of the messages are stored in a predefinable order, the order of header areas (HBO, HB1, HBk) in the header segment (HS) and the order of data areas (DBO, DB1, DBk) in the data segment (DS) respectively being identical.

4. Message memory according to Claim 1, **characterized in that** the message memory is in the form of a FIFO memory.

5. Message memory according to Claim 1, **characterized in that** the first data (KD0, KD1, KDk) of the message are stored in a respective header area (HBO, HB1, HBk) for each message and are stored using a first number of memory words which is predefined in an identical manner for each header area (HB0, HB1, HBk).

6. Message memory according to Claim 5, **characterized in that** it is formed with a predefined fixed memory word width.

7. Message memory according to Claim 1, **characterized in that** the header area (HS) and the data area (DS) directly follow one another.

8. Message memory according to Claim 1, **characterized in that** it is assigned a parity bit generator element and a parity bit checking element.

9. Message memory according to Claim 1, **characterized in that** each data area comprises at least one predefined memory word width, and a control identifier, in particular a parity bit, is provided in the data area for each memory word width.

10. Flex-Ray communication module having a message memory according to Claim 1.

11. Control device having a Flex-Ray communication module which contains a message memory according to Claim 1.

12. Method for storing a number of messages in a message memory in a communication module (100), first data (KD0, KD1, KDk) having a first data volume and second data (D0, D1, Dk) having a second data volume being contained in the messages to be stored, the second data volume being able to be different for each message, and the first data (KD0, KD1, KDk) being stored in a header segment (HS) of the message memory in a respective header area (HB0, HB1, HBk) for each message, and the second data (D0, D1, Dk) being stored in a data segment (DS) in a respective data area (DBO, DB1, DBk) for each message, **characterized in that** a partition between the header segment (HS) and the data segment (DS) is effected in a variable manner depending on the number (k) of messages and the second data volume.

## Revendications

1. Mémoire de messages dans un composant de communication (100) pour enregistrer un certain nombre de messages, des messages à enregistrer contenant des premières données (KD0, KD1, KDk) avec un premier volume de données et des secondes données (D0, D1, Dk) avec un second volume de données,
le second volume de données pouvant être différent d'un message à l'autre et la mémoire de messages (300) comporte un segment d'entête (HS) dans lequel sont enregistrées les premières données (KD0, KD1, KDk) du message, chaque fois dans une zone d'entête (HBO, HB1, HBk) par message et la mémoire de messages (300) comporte un segment de données (DS) dans lequel sont enregistrées les secondes données (D0, D1, Dk) des messages, chaque fois dans une zone de données (DBO, DB 1, DBk) par message,
**caractérisée en ce que**
la mémoire de messages (300) est réalisée pour que la répartition entre le segment d'entête (HS) et le segment de données (DS) soit variable selon le nombre k de messages et selon le second volume de données.

2. Mémoire de messages selon la revendication 1,
**caractérisée en ce que**
le segment d'entête (HS), dans chaque zone d'entête (HBO, HB1, HBk), on a un élément d'index (DPO, DP1, DPk) par message qui détermine une zone de données (DBO, DB1, DBk) dans le segment de données (DS).

3. Mémoire de messages selon la revendication 1,
**caractérisée en ce que**
les premières et secondes données des messages sont mémorisées dans un ordre prédéfini, l'ordre des zones d'entête (HBO, HB1, HBk) dans le segment d'entête (HS) et l'ordre dans la zone de données (DBO, DB1, DBk) dans le segment de données (DS) étant respectivement identiques.

4. Mémoire de messages selon la revendication 1,
**caractérisée en ce que**
la mémoire de messages est une mémoire FIFO.

5. Mémoire de messages selon la revendication 1,
**caractérisée en ce que**
les premières données (KD0, KD1, KDk) des messages sont enregistrées chaque fois dans une zone d'entête (HBO, HB1, HBk) par message et avec un premier nombre prédéfini de mots de mémoire, identiques pour chaque zone d'entête (HBO, HB1, HBk).

6. Mémoire de messages selon la revendication 5,
**caractérisée en ce qu'**
elle est réalisée avec une largeur de mots fixe, prédéfinie.

7. Mémoire de messages selon la revendication 1,
**caractérisée en ce que**
la zone d'entête (HS) et la zone de données (DS) se suivent directement.

8. Mémoire de messages selon la revendication 1,
**caractérisée en ce qu'**
il lui est associé un élément générateur de bits de parité et un élément de contrôle des bits de parité.

9. Mémoire de messages selon la revendication 1,
**caractérisée en ce que**
chaque zone de données a au moins une largeur de mots de mémoire prédéfinie et par largeur de mots de mémoire, il est prévu une caractéristique de contrôle dans la zone de données, notamment un bit de parité.

10. Composant de communication flex-ray ayant une mémoire de messages selon la revendication 1.

11. Appareil de commande avec un composant Flex-Ray munie d'une mémoire de messages selon la revendication 1.

12. Procédé d'enregistrement en mémoire d'un certain nombre de messages dans une mémoire de messages dans un composant de communication (100), selon lequel les messages à enregistrer contiennent des premières données (KD0, KD1, KDk) ayant un premier volume de données et les secondes données (D0, D1, Dk) avec un second volume de données, le second volume de données par message pouvant être différent et les premières données (KD0, KD1, KDk) sont enregistrées dans un segment d'entête (HS) de la mémoire de messages, chaque fois dans une zone d'entête (HDO, HD1, HDk) par message et les secondes données (D0, D1, Dk) sont enregistrées dans un segment de données (DS) dans chaque fois une zone de données (DBO, DB1, DBk) par message,
**caractérisé en ce qu'**
on effectue une répartition entre le segment d'entête (HS) et le segment de données (DS), de manière variable selon le nombre k de messages et le second volume de données.
